Europäisches Patentamt

European Patent Office

Office européen des brevets

(11) Veröffentlichungsnummer: **0 291 667**
**A2**

## EUROPÄISCHE PATENTANMELDUNG

(21) Anmeldenummer: 88104906.8

(22) Anmeldetag: 26.03.88

(51) Int. Cl.⁴: **C04B 35/80 , B22F 9/24**

(30) Priorität: 15.05.87 DE 3716330

(43) Veröffentlichungstag der Anmeldung:
23.11.88 Patentblatt 88/47

(84) Benannte Vertragsstaaten:
FR GB

(71) Anmelder: DORNIER SYSTEM GmbH
Postfach 1360
D-7990 Friedrichshafen(DE)

(72) Erfinder: Schmidberger, Rainer, Dr.Dipl.-Phys.
Reussenbachstrasse 33
D-7778 Markdorf(DE)
Erfinder: Marquardt, Reinhard, Dr. Dipl.-Chem.
Oberhofstrasse 19
D-7990 Friedrichshafen(DE)
Erfinder: Haug, Tilmann, Dr. Dipl.-Ing.
Friedhofstrasse 2
D-7778 Markdorf(DE)
Erfinder: Bocan, Jürgen, Dipl.-Ing.
Haldenbühlstrasse 11
D-7777 Salem 3(DE)

(74) Vertreter: Landsmann, Ralf, Dipl.-Ing.
DORNIER GMBH - Patentabteilung - Kleeweg 3
D-7990 Friedrichshafen 1(DE)

(54) Verbundpulver aus metallischen oder keramischen Whiskern.

(57) Verbundpulver mit keramischer oder metallischer Basis und dünn eingelagerten Whiskern zur Herstellung von hochbeanspruchten Bauteilen.

EP 0 291 667 A2

## Verbundpulver aus metallischen oder keramischen Whiskern

Die Erfindung betrifft ein Verbundpulver mit keramischer oder metallischer Basis und dünn eingelagerten Whiskern zur Herstellung von hochbeanspruchten Bauteilen.

Der Begriff Whisker schließt im folgenden auch polykristalline Kurzfasern ein, die zwar schlechtere mechanische Eigenschaften haben als Polykristalle, dafür jedoch leichter herstellbar sind.

Mit zunehmendem Whiskeranteil wird bei üblichen, bekannten pulvermetallurgischen Herstellungsverfahren eine homogene Verteilung der Whisker im Gefüge immer schwieriger, wenn nicht unmöglich.

Bei faserverstärkten Verbundwerkstoffen wird durch den Einbau homogen verteilte Whiskern ein anderer Bruchverlauf (Rißablenkung, Rißaufspaltung, Whiskerdelamination, Whiskerbruch) erzeugt, der in einer deutlichen Erhöhung der Zähigkeit ($k_i$-Faktor) führt. Eine gleichzeitige Verbesserung der Festigkeit hängt stark von der gewählten Maerialkombination Faser/Matrix ab (erzeugte Eigenspannungen). Das Ausmaß der Verbesserung der Zähigkeit und der Festigkeit hängt von der Volumenfraktion der Whisker ab und läßt sich durch folgende Beziehungen annähern.

$$\sigma_c = x_\mu + x_w \sigma_{c_w}$$

$$K_c = x_\mu k_{c_\mu} + x_w k_{c_w}$$

Im Gegensatz zu polykristallinen Fasern, welche weite Verbreitung in der Produktion von Verbundwerkstoffen metallischer und auch keramischer Natur gefunden haben, weisen Whisker wesentlich höhere Festigkeitswerte auf. Sie betragen in der Regel etwa dash acht- bis zehnfache von polykristalliner Fasern. Dies beeinflusst die Verbundwerkstoffe erheblich.

Die Wirkung der bisher aufgeführten Mechanismen zur Steigerung der Zähigkeit und Festigkeit hängt start vom Grad der homogenen Verteilung der Whisker in der Matrix ab. Bereiche mit deutlich erhöhtem Whiskeranteil sind als Makrodefekte zu interpretieren und wirken bei verhältnismäßig niedrigen Belastungen bruchauslösend.

Bisher wurde bei der Einbringung der Whisker auf herkömmliche pulvermetallurgische Verfahrensschritte zurückgegriffen. Nach der Reinigung in Aceton werden die Whisker in n-Hexan, Alkohol oder Wasser mit Ultraschall desagglomeriert. Von einer zusätzlichen Behandlung mit einem Taumelmischer wird berichtet. Anschließend erfolgt das Mischen mit dem Matrixpulver durch Kugelmahlen. Bei diesem Vorgang sind Whiskerbrücke nicht zu verhindern. Solche Bruchstücke weisen in der Regel scharfe Kanten auf und führen später zu hohen Spannungskonzentrationen in der Matrix. Die homogene Verteilung der Whisker stößt mit zunehmendem Whisker-Volumengehalt auf Schwierigkeiten bei Anwendung der beschriebenen herkömmlichen Techniken.

Eine andere Technik zur feinen Verteilung keramischer Whisker in einer Matrix aus Metall oder Kunststoff ist in der US-A-4,548,774 der Firma Tokai Carbon beschrieben. Die Literaturstelle beschreibt die Möglichkeit, direkt bei der Whiskerherstellung einen hochporösen Körper herzustellen, aufgebaut aus den Whiskern mit den Dimensionen 0.2 - 0,5 µm Durchmesser und einer Länge von 100 - 200 µm. Dieser Körper wird durch Pressen vorverdichtet und mit flüssigem Metall oder Kunststoff druckinfiltriert, so dass ein homogener Verbundwerkstoff entsteht. Diese Technik hat jedoch den Nachteil, dass eine nachträgliche Infiltration eines porösen Faserkörpers apparativ aufwendig ist und nur bei einigen Metallen, Legierungen und Kunststoffen befriedigend möglich ist und mit abnehmender Porosität und damit zunehmendem Whiskeranteil erschwert wird.

Der Erfindung liegt die Aufgabe zugrunde, Zähigkeit und Zugfestigkeit von keramischen oder pulvermetallurgischen Verbundwerkstoffen über die Pulverherselllung zu verbessern.

Gelöst wird diese Aufgabe von einem Pulver mit den in Anspruch 1 genannten Merkmalen.

Die Erfindung bietet die Möglichkeit auch bei hohen Volumenanteilen von Whiskern eine homogene Verteilung derselben ohne Whiskerbruch im Pulver zu erzielen und schafft damit die Voraussetzung zur Erzeugung optimaler Gefüge whiskerverstärkter Werkstoffe.

Erfindungsgemäss können sowohl metallische als auch keramische, whiskerhaltige Pulver mit gleichmäßiger Verteilung der Whisker erzeugt werden. Die homogene Verteilung der Whisker als auch die hohe spezifische Oberfläche der nach dem Reaktions-Sprühverfahren (RSV) hergestellten Pulver hat unmittelbare Wirkung auf die Sinteraktivität und auf mögliche Formgebungsverfahren. Je nach Vorbehandlung kann zusätzlich eine Ausrichtung der Whisker im Verbundkörper erfolgen. Mittels bekannten Verarbeitungsverfahren, wie Foliengießen, Schlickerguß, Strangpressen oder Heißpressen können mit den in Anspruch 1 genanten Pulvern die verschiedensten dick- oder dünnwandigen oder auch hochporösen Formteile hergestellt werden, deren verbeserte mechanische Eigenschaften auch noch bei extrem hohen Temperaturen gewährleistet sind.

Die Erfindung wird nachfolgend anhand von Figuren näher erläutert.

Es zeigen:

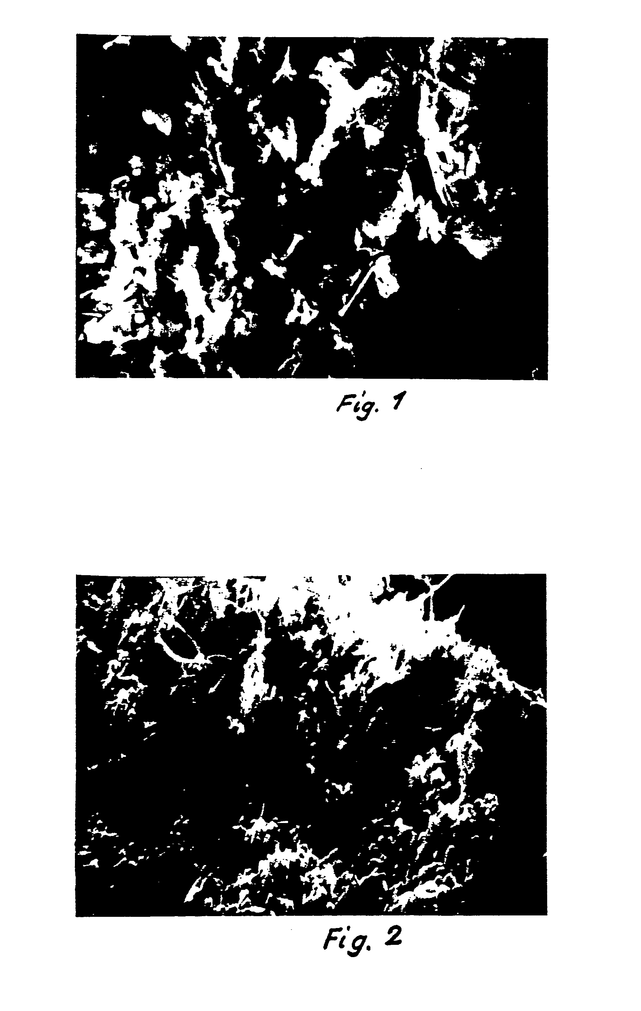

Figur 1 ein unbehandeltes, keramisches Pulver mit eingelagerten Whiskern und

Figur 2 die Bruchfläche eines porös gesinterten Keramik-Preßlings mit eingelgerten Whiskern.

Die Herstellung der Pulver geschieht wie folgt: Bei den in Ansprüchen 2 und 4 beschriebenen Whiskern ist herstellungsbedingt mit Agglomeraten und Verunreinigungen zu rechnen, welche eine Vorbehandlung notwendig machen. Dabei werden vor allen Dingen diskrete Fremdpartikel entfernt. Zunächst werden die Whisker in Aceton bzw. Alkohol mit Hilfe eines Turborührers oder durch Einwirkung von Ultraschall suspendiert und desagglomeriert. Solche Partikel sedimentieren wesentlich - schneller und können dadurch dekantiert werden. Die überstehende Suspension wird durch Filtrieren vom Lösungsmittel befreit, die Whisker in Wasser aufgenommen und erneut mittels Turborühren oder Ultraschall suspendiert. Die homogene Verteilung der Whisker kann im Bedarfsfall durch Zugabe üblicher Stellmittel (Polyalkohole etc.) erhöht werden. In diese Suspension werden nun die Salze bzw. Salzlösungen, deren zugrundeliegenden Kationen später die metallische oder keramische Matrix bilden, eingerührt.

Durch Einstelloperationen wird die gewünschte Konzentration und das gewünschte Matrix/Whisker-Volumenverhältnis eingestellt.

Die so erhaltene Suspension wird unter ständigen Rühren im Suspensions-Vorratsgefäß in einen heißen Reaktor eingesprüht.

Durch Versprühen einer derartigen Suspension gemäß dem RSV (= Reaktions-Sprüh-Verfahren) werden für das Verbundmaterial vorteilhafte Effekte miteinander kombiniert.

a) Feinkörnigkeit oder erhaltenen Pulver,

b) homogene verteilung der Whisker im Pulver,

c) homogene Verteilung der Bestandteile, aus denen die die Whisker einbettende Matrix besteht.

a) Läßt sich über Durchsatz und Zusammmensetzung der Suspension bzw. die Art der eingesetzten Düse (2-Stoff, CSL ...), Temperatur des Reaktors Verweilzeit im Reaktor, ganz allgemein also über freiwählbare Präparationsparameter steuern,

b) wird durch Homogenität der eingesetzten Suspension gewährleistet,

c) ergibt sich aus der Tatsache, daß die Matrixbestandteile in Form einer Lösung oder im Einzelfall als homogene Suspension eingesetzt werden.

Der Volumenanteil der Whisker beträgt 1 bis 50 %, bezogen auf den porenfrei verdichteten Verbundwerkstoff.

Beispiel 1: Lösungsherstellung Keramik

72, Sg SiC-Whisker werden wie beschrieben vorbehandelt und konditioniert. Zu den in 2 l Wassere suspendierten Whiskern wird portionsweise 2354 g $AlCl_3 \cdot 6H_2O$ zugegeben.

Die Lösung wird dann auf 4 l verdünnt und in einen 1100°C heißen Reaktor versprüht. Man erhält Aluminiumoxidpulver mit 15 Vol-% SiC-Whisker.

Beispiel 2: Lösungsherstellung Schwermetall

10g $Si_3N_4$-Whisker werden wie beschrieben vorbehandelt. Durch Zugabe von Ammoniummetawolframat, Nickenitrat und Kobaltnitrat wird eine wässrige Suspension, bestehend aus einer echten Lösung von Wolfram, Nickel und Kobalt, mit darin aufgeschlämmten Whiskern hergestellt. Sie enthält 900g Wolfram, 70g Nickel und 30g Kobalt in 2,5 l Suspensionsvolumen. Nach Versprühen in einen 1150°C heißen, mit $H_2$-Gas gespülten Reaktor enthält man W-Schwermetall mit 6 Vol-% $Si_3N_4$-Whisker.

**Ansprüche**

1. Verbundpulver aus metallischen oder keramischen Whiskern und metallischer oder keramischer Matrix, **dadurch gekennzeichnet**, daß die Whisker mit einer Länge zwischen 5 x $10^{-6}$ m und 2 x $10^{-4}$ m und Durchmessern zwischen 2 x $10^{-7}$ und 1 x $10^{-5}$ m von der Matrix umhüllt sind und der Volumenanteil der Whisker 1 bis 30 %, bezogen auf den porenfrei verdichteten Verbundwerkstoff, beträgt.

2. Verbundpulver nach Anspruch 1, dadurch gekennzeichnet, daß die Whisker aus SiC, $Si_3N_4$, $Al_2O_3$ oder $ZrO_2$ bestehen und die Matrix aus Keramik besteht.

3. Verbundpulver nach Anspruch 2, dadurch gekennzeichnet, daß die Oxidkeramik $Al_2O_3$, $Al_2O_3$ + 5 bis 40 % $ZrO_2$ + O bis 5 % $Y_2O_3$ oder $ZrO_2$ mit 3 bis 15 % $Y_2O_3$ oder Si-Nitrid bzw. Si-Carbid ist.

4. Verbundpulver nach Anspruch 1 dadurch gekennzeichnet, daß Whisker aus $Si_3N_4$, $Al_2O_3$, $ZrO_2$ oder W bestehen und die Matrix aus W, Mo, Fe, Ni, Co, Cu oder deren Legierungen bestehen.

5. Verbundpulver nach den Ansprüchen 1 bis 4, dadurch gekennzeichnet, daß die Whisker zusätzlich metallisch oder keramisch beschichtet sein können.

6. Verfahren zur Hertstellung von Verbundpulvern nach den Ansprüchen 1 bis 3 und 5, dadurch gekennzeichnet, daß die der Oxidkeramik zugrundeliegenden Metalle in der gewünschten Stöchiometrie in gelöster Form mit den suspendierten Whiskern in einen heißen Reaktor versprüht werden.

7. Verfahren zur Herstellung der Verbundpulver nach den Ansprüchen 1, 4 und 5, dadurch gekennzeichnet, daß die Metallsalz/Whisker-Suspension in einen heißen, mit reduzierender Atmosphäre betriebenen Reaktor versprüht wird.

Fig. 1

Fig. 2